# EUROPEAN PATENT SPECIFICATION

(11) **EP 1 366 590 B1**
(45) Date of publication and mention of the grant of the patent: **25.05.2005**
(21) Application number: 02708346.8
(22) Date of filing: 06.03.2002
(51) Int. Cl.: H04L 1/00

(54) **FLEXIBLE USER DISTRIBUTION BETWEEN USER'S SERVING ENTITITES**
FLEXIBLE BENUTZER VERTEILUNG ZWISCHEN BENUTZERDIENSTEINHEITEN
REPARTITION FLEXIBLE DES UTILISATEURS ENTRE ENTITES DE SERVICE UTILISATEURS

(30) Priority: 06.03.2001 US 273759 P; 04.03.2002 US 91658
(43) Date of publication of application: 03.12.2003
(73) Proprietor: Telefonaktiebolaget LM Ericsson (publ), 164 83 Stockholm (SE)
(72) Inventor: SANCHEZ HERRERO, Juan Antonio, E-28004 Madrid (ES); ANDRES, Isabel, Plata, DE-89073 Ulm (DE)
(74) Representative: Tonscheidt, Andreas, Dr.
(86) International application number: PCT/EP2002/002440
(87) International publication number: WO 2002/071674

(56) References cited:
- WO-A-00/39981
- WO-A-00/69140
- WO-A-01/03402
- US-A- 6 049 714

## Description

The invention disclosed and claimed herein generally pertains to large communications networks that use multiple servers to provide services to their users or subscribers, being said users or subscribers identified or accessed by a number of different user identifiers. More particularly, the invention pertains to means, system and method for networks of the above type which enable the appropriate server to be found for providing a specific user with a specific server, without restricting the types of identifiers being used for both the user and the server providing the service.

Large telecommunication systems now tend to extend across multiple operator networks, wherein respective networks offer a wide range of different services and are frequently based on different and independent technologies. An important illustration of this development is the interconnection of new emerging Internet based networks, in either a fixed or mobile environment, with traditional wireline and wireless telephony systems. The integration of different operator networks, of different natures and offering different types of services to network subscribers, frequently requires a multiplicity of different servers within a telecommunication network, to hold subscriptions and to provide services to their users.

On the other hand, the implementation and support of new innovative services by making use of existing network resources, appropriately modified, can become a major impediment to effectively launching these new services into the market, in a timely manner and without risking performance or other features in the existing network resources. A quite commonly used approach has been the introduction of new dedicated servers for introducing services available or intended for use only under certain technologies. One of the basic problems facing the introduction of multiple service-dedicated servers, as well as of multiple subscription-dedicated servers, is thus how to find the appropriate server for serving specific users without any restriction regarding the identification of both the user and the server providing the service. A solution to this problem must be adaptable to user and server identifiers that are not presently available or known.

Generally speaking, a user or subscriber is now likely to be identified in a large telecommunications network by specific user identifiers that are usually different depending on the particular system technologies. In some cases, a particular network supports or uses more than one identifier for the same user due to different reasons. There are networks such as GSM and ANSI-41 that, being conceptually similar in many aspects, make use of different user identifiers.

For example, the GSM networks have specific user identifiers, such as the IMSI, for internal identification purposes, whereas both the GSM and PSTN networks have E.164 identifiers for external identification purposes. Also, the E.164 identifiers can be associated with users or network nodes, and can be used for addressing purposes. In the UMTS network, in like manner with the GSM network, numerical schemes co-exist with non-numerical schemes. As another example, Internet Protocol (IP) multimedia systems make use of different identifiers typically based on non-numerical schemes such as, for example, SIP url, e-mail names, or other aliases. These identifiers are used to identify subscribers in a particular service environment, that is, subscriber disposed to receive a particular service or set of services. These identifiers are also used to identify servers for a particular service. On the other hand, these IP multimedia systems also make use of the E.164 identifiers for interconnection with PSTN networks whereas typical IP mechanisms are used for addressing purposes.

The increasing use of different identifiers for each user, as well as the presence of multiple servers associated with different services or service environments in a large telecommunication network, requires an improved mechanism for finding the appropriate server for servicing specific users. The improved mechanism must be highly flexible, that is, it must not limit or restrict the use of multiple identifiers for users or servers providing services as described above. The mechanism must also take into account serious real-time constraints in the process of determining which server is the actual or correct one for serving an end-user. Moreover, the provided solution must minimize implementation and configuration complexity and limit operating costs, notwithstanding the large number of users, each with multiple user identifiers, which may be associated with a communication network.

The above need for more efficient distribution of user identifiers was emphasized during the development of the IP multimedia subsystem in the standardization forum "*3*^{*rd*} *Generation Partnership Project"* (hereinafter 3GPP). In particular, an interested reader is addressed into the issue of Subscription Location Functionality as described in Annex F (Informative): *"User Identity* to *HSS resolution"* in Technical Specification (TS) 23.228. Therein, it was recognized that during the Registration and Session Establishment there is a need for locating the actual Home Subscriber Server (HSS) currently holding subscriber specific data, such as location or authentication parameters, since most probably there are more than one HSS in that particular operator's network.

Thereby, it is a first object of the present invention to provide means and methods for allowing a flexible distribution of users amongst a plurality of different and dedicated subscription and service servers. Said flexible distribution being desirably independent from user identifier schemes, structures and applicable service.

It is another object of the present invention the provision of a solution minimising impacts on the currently proposed architecture for telecommunications systems of 3^{rd} Generation being as compatible as possible with the existing traditional telecommunication systems.

It is a further object of the present invention to provide the means and methods for allowing the aforementioned flexible distribution of users without significantly increasing the required Operation and Maintenance (O&M) tasks and associated costs. In this respect, automated procedures to exchange required data between databases is an important feature sought by the present invention.

### RELATED ART

Interesting start points are found in typical wireless systems of 2^{nd} generation like GSM and ANSI-41 networks. As said wireless systems were getting more and more subscribers, the operators wanted high dimensioned subscriber databases like the Home Location Register (HLR) in order to hold a huge amount of subscriptions minimising the O&M activities and optimising the routing tables in the Signalling System number 7 (SS7) network. Later on, the operators trended to introduce redundant HLRs by splitting the existing ones so that each HLR included series of own subscribers and series of subscribers owned by a redundant HLR. This initial distribution of subscribers for supporting Redundancy was accompanied by introducing more and more complex routing tables in the SS7 network. The possible needs for a database distributor to find the appropriate HLR holding the subscription for certain subscriber was not yet a must since, being complete subscriber series moved from one HLR to another, the distribution could be solved by adding more routing tables in the SS7 network. The more recent appearance of Number Portability requirements, in some cases by law regulation, where individual subscribers were moved from one HLR belonging to one operator to another HLR belonging to another operator definitely made the needs for a database distributor being a must.

An exemplary description of such a database distributor can be found in the international application WO 99/23838 wherein said database distributor in a certain network is referred to as Flexible Number Register (FNR). This FNR is the natural entry point in a wireless network of 2^{nd} generation for queries related to those subscribers whose user number series belong to said network, independently of what network currently holds the subscriber subscription. That is, said FNR comprises all the user number series addressing such network and also individual user numbers. for subscribers ported into this network from another network. Besides, individual user numbers of home subscribers who had been ported to another network are specially marked and have a particular network identifier to reach an entry node in the network where the subscriber currently holds his or her subscription.

Subscriber related queries based on user numbers such IMSI or E.164 formats are addressed to the FNR in a network addressed by said IMSI or E.164 format. Then, the FNR determines whether the query should be simply transferred to the appropriate HLR within its own network for subscribers never ported or imported from other networks, or the query should be re-directed to the appropriate network where the subscriber has been exported. All the required routing and addressing mechanisms are carried out at lower signalling layers like at the Signalling Connection Control Part (SCCP) within SS7.

Even though this solution is considered the closest prior art, it still presents serious limitations for a direct applicability to newer scenarios interconnecting traditional fixed and wireless telephony networks with Internet and Multimedia service networks in large telecommunication systems. For example, this FNR prior art just considers signalling, routing, and addressing in accordance with SS7 principles where subscriber or user identifiers are merely based on structured numbers. Moreover, at least one of the identifiers associated to a subscriber must be structured in such a way that the analysis of such number unambiguously identifies the appropriate HLR. Still another limitation of this previous solution is that neither other newer identifier realms, nor protocol support other than SS7 related upper layers were considered during the development of these 2^{nd} generation wireless networks. Further, another drawback behind this solution, and which solution is an object of the present invention, is the costly operation and maintenance of these database structures wherein operators have to manually intervene all of them to ensure consistent data interrelation. Still further, there is nothing anticipated in this prior art in respect of service-dedicated servers, such as those for supporting multimedia related services, that might be addressed in response to queries based on corresponding user identifiers.

The US patent application publication 2001/0049676 (Kepler et al.) describes methods and system for searching of contents using database hierarchies structured into primary databases owning particular data and secondary databases with subsets of those data along with a field for indicating the primary database owning these data. This application introduces the needs for a front-end routing database where having a large amount of data distributed among several back-end databases, making it not convenient sequential queries and, even less, knowing all these back-end databases or what sort of data are contained therein. Apart from that, as anyone skilled in the art may appreciate, there may be some additional advantages on receiving such queries in a front-end database like validation of query search fields precluding further checks as relaying said query to the back-end databases concerned. When a database search is received at the front-end database, a modified search is generated based on the overlap between the type of information contained in the search request and the type of information contained in the data-field of the front-end database. This modified search request is used to fetch a list of database candidates that could produce results to the original search request. The original search request is then submitted to those database candidates, and the results are returned to the user.

As anyone skilled in the art may appreciate the teaching in this application above is well oriented to carry out searches of specific contents where a list of candidate results is presented to the user for selecting the more attractive one in respect of the objectives from the original search. In particular, this application seems to describe the sort of tasks performed by searchers. This approach is not convenient, however, for been applied where users of 3G wireless networks try to invoke a particular service such as initiating a videoconference for instance. A calling user is making a call, or invoking one service, and the network is expected to behave transparently so that the user does not take any action on selecting the most appropriate server which, on the other hand, is absolutely unknown to the users in normal cases. In this respect, neither the search nor the routing approaches in this application can be applied for achieving a flexible distribution of users in a plurality of different servers in a telecommunications system.

WO-A1-00/69140 states that most of the existing systems rely on a centralized architecture which may make it difficult to distribute a user database and traffic among many service providers, and addresses the problem of how to provide users with a single address to use for all communications. To solve this and other problems, this application provides a plurality of clusters or servers in a confederated network, wherein each cluster may be linked to other clusters in order to forward user service requests through a so-formed chain structure. In this confederated network, each user is registered within a specific cluster and given a globally unique user ID that is composed of a unique user ID along with the cluster ID of the cluster where the user is registered. Correspondingly, different naming schemes for user identifiers are not disclosed. Moreover, as the user identifiers are distributed in a chain structure of clusters, a network operator owning such network of clusters encounters difficulties to freely allocate and move users among the existing clusters attending to its own needs and premises, without the user being aware of, and without significant operation costs. Whenever a user is moved from a first to a second cluster, the user has to be given a new network address to contact for registering into the new network cluster, and its user identifier, which is used for other users reaching such user and comprises the user ID along with the cluster ID where the user is registered, also changes accordingly. Any change of allocation of users, any new distribution of users among the existing network clusters, produces an increase of Operation and Maintenance costs at operator side as well as a significant disturbance to moved users. Thus, this application does not solve the above problem of distributing user identifiers among a plurality of network servers in a flexible manner to allow operators a change of allocation for a number of users from one network server to another, as well as to minimise implementation complexity and operation costs.

The international application WO-A1-01/03402 provides a system and a method for authenticating, and thus identifying, a subscriber of a first network in a second network, the subscriber having at least one subscriber identity in the first network holding the user's subscription. Therefore, an address of the second network is assigned to said subscriber, and a mapping between said address of the second network and said subscriber identity is carried out by an authentication client and transmitted to the second network through a gateway device connecting said first and second networks. The subscriber can be thus authenticated in the second network thanks to this address of the second network provided. Given that said subscriber has a subscription in the first network, said first network is responsible for all the subscriber identities for this and for other subscribers as well as for distributing them between subscriber databases like the Home Location Register (HLR) following particular criteria established in said owning first network. However, this application is silent about distribution of own subscribers.

Publication WO 00/39981 relates to techniques for providing number portability toward Internet service providers. This document provides a method and a system for routing calls through a telecommunication network having a number portability database for receiving queries from a call-originating domain for locating a network node parameter associated with a called subscriber in a data communications domain, and said number portability database returning toward the querying entity said network node parameter. There is provided a centralized database with a user identifier for a subscriber ported to another network, the user identifier associated with a network node parameter addressing another network where the call should be re-directed. However, there is no support for having a plurality of user identifiers under different service environment for each user, where each user identifier may be associated to different network servers depending not only on the user identifier but also on the applicable service. Moreover, this document does not propose any alternative mechanism for updating contents in the number portability databases, when a user is allocated in a different server, other than the conventionally implemented procedure where operators manually intervene said databases to update user data whenever there is a change affecting the distribution of users. Still further, this document does not teach any mechanism whereby the database may be consulted about a local user under a given service environment, the local user having a plurality of user identifiers, and different user identifiers associated with a same or different service identifiers handled in a same or different network servers. Thereby, this document still shares most of the drawbacks commented above for number portability databases, such as the costly operation and maintenance wherein operators have to manually intervene to ensure consistent data, and the appearance of services and service-dedicated servers.

Thereby, the aforementioned objects of the present invention do not seem to be accomplished or anticipated by the teachings from the applications above. In this respect, the provision of means and methods for allowing a flexible distribution of users amongst a plurality of servers independently from user identifier schemes, structures and applicable service is an object of the present invention. Said means and methods minimising impacts on the interconnection of newer and traditional telecommunication systems as well as minimising O&M tasks and costs are also objects of the present invention.

### SUMMARY OF THE INVENTION

To accomplish these objects the present invention places a user identifier distributor in a network resolution domain and accessible to an entity disposed to request user information. The distributor, or User Distribution Server (UDS), comprises a plurality of user identifiers per subscriber basis that are intended for identifying a user under different service environments.

This UDS implements a secondary database with users and servers identifiers obtained from primary databases and is arranged for determining a specific network server in charge of a given user under a particular service environment. These specific network servers are considered primary databases wherein subscribers, or more specifically, user data under particular service environment, are distributed.

Thus, the UDS acts as a secondary database comprising means for recovering user identifiers and necessary service data from said specific network servers acting as primary databases as well as from other UDS in the network resolution domain. This UDS also comprises storage for user identifiers and necessary service data, if any, per specific network server.

Said UDS, being able to determine the specific network server in charge of a given user identified by a certain user identifier under particular service environment, further comprises the means for receiving and processing service requests from a Service Requester Node or from another UDS in the resolution domain. Moreover, said UDS also comprises the means for answering the previous request to said Service Requester Node or to another UDS. In particular, the answer may include the specific network server in charge of said user under a particular service environment, or a list of possible network servers if a redundant configuration exists, or a new user identifier with indication that another query on a given new identifier in another server is necessary, and optionally indicating the reason.

The UDS is adapted for communicating with primary databases, other external databases, and Service Requester Nodes with the same or with different protocols. Therefore, the UDS further comprises at least one of a plurality of Protocol Handler Modules and in some instances a Protocol Discriminator Module.

The invention thus provides a system comprising at least one UDS as described above, though more than one can be included. For instance, different UDS may be in charge of different network domain sectors if proximity criteria, regarding location of the existing Service Requester Nodes, are taken into consideration. In this system, several primary databases may update different UDS with different contents, or with the same contents for redundancy purposes.

In one embodiment, the UDS may act as a Subscription Locator Function. The UDS in this embodiment is able to determine the Home Subscription Server (HSS) in charge of a given subscriber. These HSS acting as primary databases of the UDS. The Service Requester Node in this system acting for example as an Interrogating or a Serving Call Status Control Function.

Another embodiment of the invention is directed to a telecommunications system, wherein relevant user identifiers in at least one of a plurality of primary databases may be submitted for updating to one specific UDS, to a group of UDS, or to all UDS known at the at least one primary database. Also, at least one of a plurality of primary databases is arranged for receiving UDS recovery preferences from one specific UDS, from a group of UDS, or from all UDS known at the at least one primary database.
The system is further arranged for updating each UDS accordingly with each of the recovery preferences.

The invention also provides a method in a network resolution domain, wherein a plurality of user identifiers per subscriber basis are used, for identifying a user under different service environments. The method comprises the step of determining a specific network server in charge of each user under a particular service environment in a User Distribution Server (UDS). The method also comprises the step of recovering at the UDS user identifiers and necessary service data from specific network servers acting as primary databases as well as from other UDS in the network resolution domain; and the step of storing at the UDS said user identifiers and necessary service data per subscriber basis, if any, per specific network server. The method further comprises the step of receiving and processing service requests from a Service Requester Node or from another UDS in the resolution domain; and the step of answering an expected response to the Service Requester Node or to another UDS. Said expected response might be the specific network server in charge of said user under a particular service environment, or a list of possible network servers if a redundant configuration exists, or a new user identifier with indication that another query on said new identifier in another server is necessary, and optionally indicating the reason behind.

Due to the special flexibility provided by a UDS in accordance with the invention, the Service Requester Node may be as well a Mobile Switching Center, or a Signalling Gateway, or a GPRS Supporting Node, or an Application Server for multimedia use. This list is exemplary presented in a non-restrictive manner, and is in no way intended to limit the scope of the invention.

### BRIEF DESCRIPTION OF DRAWINGS

The features, objects and advantages of the invention will become apparent by reading this description in conjunction with the accompanying drawings, in which:
**FIG. 1** illustrates a generic network architecture showing primary and secondary database structures for an embodiment of the invention.
**FIG. 2** basically shows the contents of an individual record per subscriber in the secondary database for at least one embodiment of the invention.
**FIG. 3a** schematically describes an embodiment of the internal architecture of a User Distribution Server in accordance with the invention.
**FIG. 3b** schematically describes another embodiment of the internal architecture of a User Distribution Server wherein multiple protocols are handled in an external Protocol Adaptation Entity.
**FIG. 4** basically presents an exemplary sequence of flows to be carried out for updating of secondary databases with contents from primary databases in the embodiment of Fig. 1.

### DETAILED DESCRIPTION OF PREFERRED EMBODIMENTS

The following describes currently preferred embodiments of means, method and system for allowing a flexible distribution of users amongst a plurality of servers independently from user identifier schemes, structures and applicable service.

In accordance with an aspect of the present invention, a User Distribution Server (hereinafter UDS) is provided in a network resolution domain for receiving service request related queries for specific users in particular service environments. The UDS is arranged for acting as a secondary database that comprises a plurality of user identifiers on a per subscriber basis, each user identifier applicable in a particular service environment and associated with a server identifier addressing the particular server currently in charge of corresponding user data. These particular servers are arranged for acting as primary databases from which user identifiers and necessary service data are downloaded into the UDS acting as secondary database. The UDS answers a service request related query for a specific user to any service requester node by providing the server identifier to further address the particular server currently serving the user in the applicable service environment.

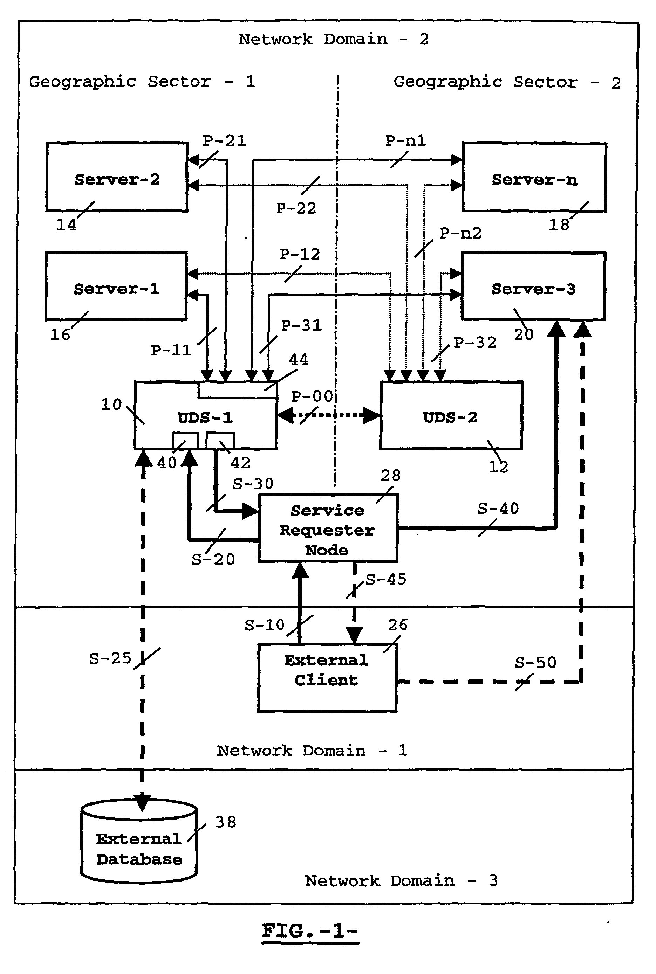

The exemplary architecture in Fig. 1, for allowing a flexible distribution of users, shows how dedicated User Distribution Servers may be in charge of particular geographical locations in a certain network domain. For example, UDS-1 and UDS-2 may be respectively in charge of Geographic Sector-1 and Geographic Sector-2 in a Network Domain-2. User identifiers may be distributed under different criteria among a plurality of servers in this Network Domain-2, wherein for the sake of clarity just Server-1, Server-2, Server-3, and Server-n are shown. These servers are referenced 14-20, respectively. Said Server-1, Server-2, Server-3, and Server-n act as primary databases from which user data are downloaded to UDS-1 and likely to UDS-2 via respective interfaces (P-11, P-12) from said Server-1, (P-21, P-22) from said Server-2, (P-31, P-32) from said Server-3 and (P-n1, P-n2) from said Server-n.

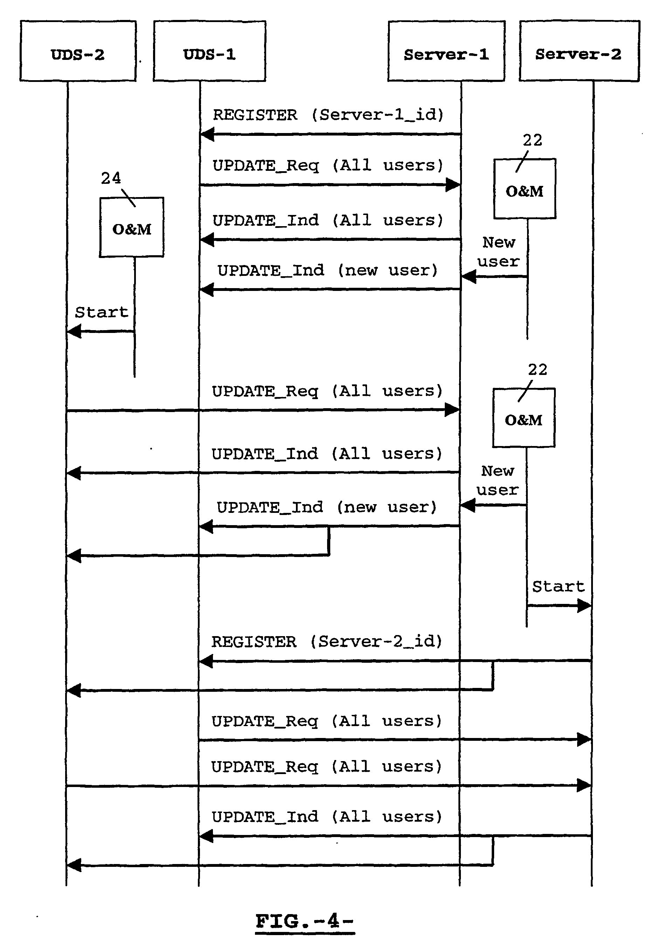

The classification between primary and secondary databases simplifies data handling, allowing changes to be easily managed in primary databases, and those changes to be further updated in secondary databases. An exemplary embodiment of how this updating takes place is presented in Fig. 4, wherein an initial assumption is that UDS-1 already exist in the network and an Operation & Maintenance system (22) has started a new server (Server-1). Under this assumption Server-1 indicates its presence to UDS-1 by means of an applicable protocol operation like REGISTER comprising its own server-1 identifier. The UDS-1 requests update for all relevant users with such server indication in an applicable protocol operation like UPDATE_Req. Upon receiving the request at the Server-1, appropriate user data are submitted with applicable protocol means represented in Fig. 4 by an operation UPDATE_Ind. This operation may in practice represent a certain signalling flow to submit user data for all the subscribers in the Server-1. After having updated the UDS-1, any new update made by O&M system (22) in the primary database like the Server-1, like a new user, produces an automatic update from the Server-1 towards the UDS-1. Similar protocol means as for all users or others more specifically, both including the new user identifiers, may use for example the said operation UPDATE_Ind.

The Fig. 4 also shows how another UDS (UDS-2) may be introduced in the network under the assumption that the situation described above has been reached. The UDS-2 is started from O&M system (24), or by other typical means, and is already or recently configured to know the presently existing Servers that it should deal with. Under the assumptions described above, said UDS-2 requests update for all relevant users with similar indication and protocol operation as above, and represented by the operation UPDATE_Req in this Fig. 4. Upon receiving the request at the Server-1, a process similar to updating the UDS-1 takes place with necessary update indications (UPDATE_Ind) until downloading identifiers for all users. Provided that any new update is made by the O&M system (22) in the Server-1, like a new user, an automatic update is triggered from said Server-1 towards both UDS-1 and UDS-2.

Another exemplary step in Fig. 4 takes into consideration the introduction of still another server (Server-2) in the scenario above. The Server-2 is started from O&M system (24), or by other typical means, and is already or lately configured to know the presently existing UDS that must be updated. Then, the Server-2 indicates its presence to UDS-1 and UDS-2 by broadcasting the applicable protocol operation, like the aforementioned REGISTER operation, comprising its own server-2 identifier. Then, upon receiving from each UDS the corresponding request for updating all user-related information, the Server-2 triggers the corresponding indications (UPDATE_Ind) to the requesting UDS.

As a result of the updating procedures described above, a UDS includes information related to all the servers providing specific services in the network, or in the network sector under its own control, including the relevant served user identifiers on a per subscriber basis. Therefore, primary databases update the UDS where relevant user data change. Moreover, in a resolution domain wherein a plurality of UDS exists, each UDS may maintain redundant information updated either directly from the primary database, or from another UDS, or from both under certain criteria. For example and as depicted in Fig. 1, User Distribution Servers serving different geographic sectors may provide each other the requested information by means of a link (P-00). Preferably, the UDS may contact some specific servers on its own for providing more dynamic information about the serving entity when required.

To this end, servers (Server-1, Server-2, Server-3, Server-n) in a network domain subscribe (P-11, P-21, P-31, P-n1) from themselves to at least one (UDS-1) of a plurality of UDS in the Network Domain - 2. In addition, where another UDS exists (UDS-2) both UDS may communicate (P-00) with each other for cross-checking data, or for reliability reasons, or simply because they are in charge of different geographical areas.

As shown in Fig 1, a typical flow occurs where an External Client (26) in a network resolution domain, like the Network Domain - 1, sends a message (S-10) towards a Service Requester Node, generally speaking, in another network resolution domain like the Network Domain - 2. Said message could be, for example, part of a call or part of a registration flow, and upon reception the Service Requester node initiates a query (S-20) towards a particular UDS (UDS-1). Said UDS may be assigned at the Service Requester Node for handling the service request related queries by given means such as those carried out during discovery phase, during the start-up phase, or by configuration.

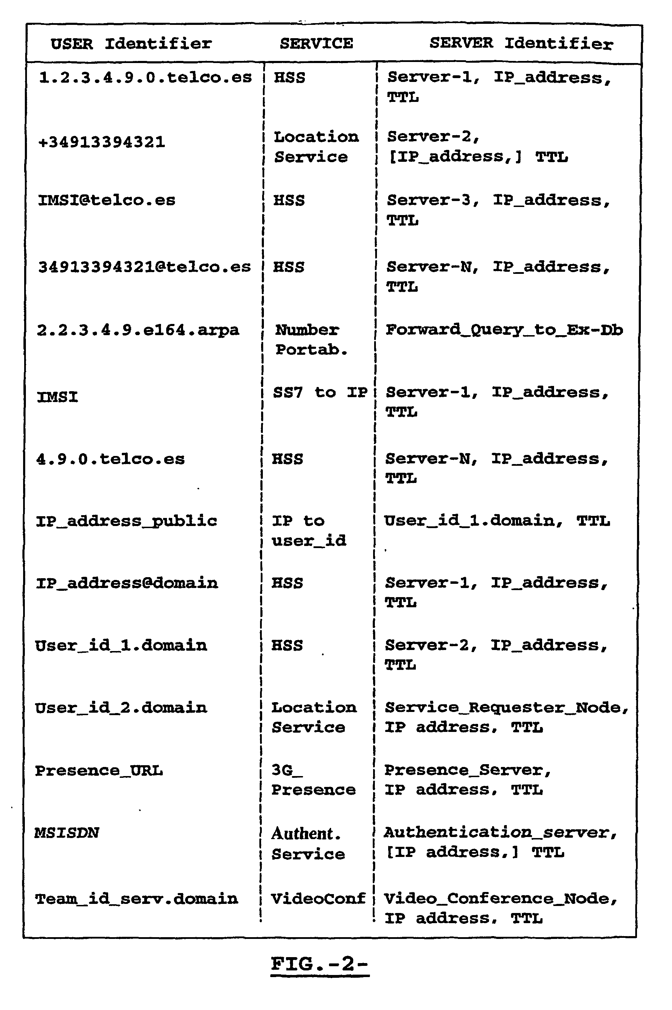

The UDS receiving the query (UDS-1) checks the received parameters, namely the user and/or service related data and, by inspection of its database records, UDS-1 encounters the appropriate server in charge of the specific user under the applicable service environment. In this respect, Fig. 2 presents an explanatory and non-restrictive instance of internal database contents in a UDS according to an aspect of the present invention. Fig. 2 illustrates that a specific user could have different identifiers.

A UDS is queried by the entities requesting the connection with a specific server providing service to the specific user. Therefore, the requesting entity indicates the user identifier and optionally other data such as the indication of the requested service. Generally speaking, the UDS database behaviour can be optimised by customised behaviours like, for instance, the fact of accepting queries without explicit indication of the service involved in which case all the stored user data are returned for another node to interpret this result. Given that this user and service related information may change very rapidly, parameters indicating its validity like the Time-To-Live value (hereinafter referred to as TTL) is indicated. Moreover, in the case that more than one server can provide the service to a specific user, for example in case of redundant configurations, the list of possible servers may be indicated. Still further, in case that the user identifier is structured in such way that all users included in a certain level of the structure were served by a specific server, the query's answer may indicate said level of the structure.

However, if the indicated user or service is not available in the network resolution domain the UDS sends the appropriate error. An important aspect in this respect is the ability of UDS for querying an External database (S-25) as shown in Fig. 1 in order to request further information about certain entries such as for Number Portability resolution. This External database (hereinafter abbreviated as Ex-Db) might be of a similar structure and have similar contents as the UDS in accordance with an aspect of the present invention, or might have other structure or contents. The interface for consulting this external database might be one of those used between primary and secondary databases or might be a different one.

Once the query has been internally or externally resolved, the UDS-1 returns (S-30) to the Service Requester Node a corresponding response comprising the appropriate server identifier in order to further address the appropriate server. Given that these answers can be cached by the Service Requester Node, a validity time, the aforementioned TTL value, is supplied in the answer to optimise such caching.

Further, the Service Requester Node may either address (S-40) the appropriate server, or correspondingly send (S-45) the expected response to the External Client for the Client to address (S-50) the appropriate server, depending on different call premises.

Fig. 1 further shows UDS-1 provided with first means (40) and second means (42) for respectively receiving a query (S-20) and providing a response or answer (S-30). UDS-1 is also provided with third means (44) for transferring or recovering user identifiers and service data from the server primary databases.

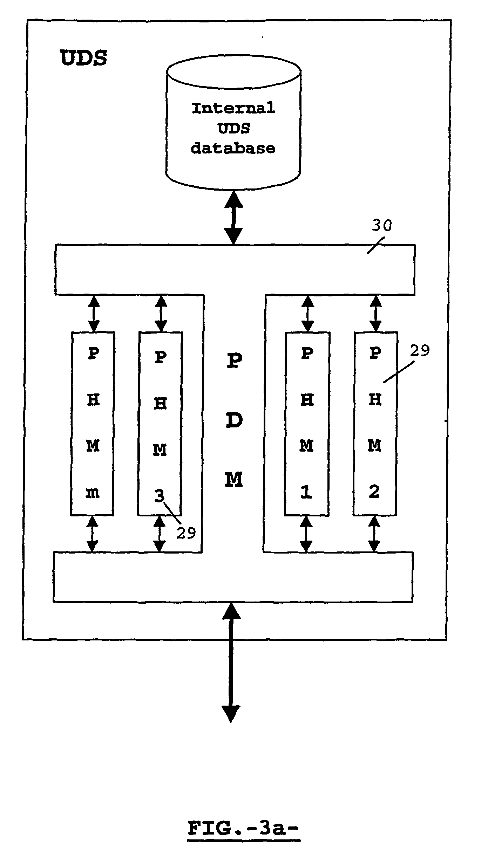

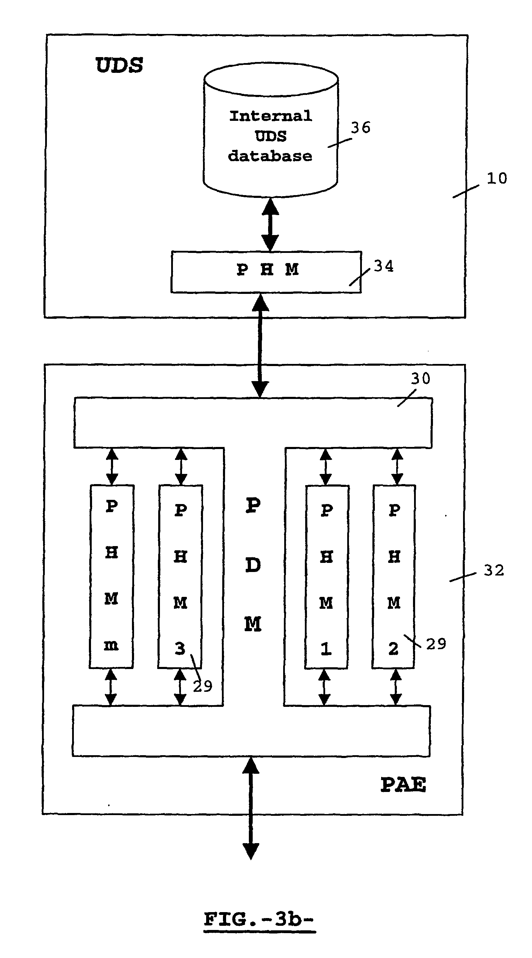

As already mentioned above, the UDS is arranged for handling different protocols for communicating with the different particular servers acting as primary databases, for communicating with eventual External Databases and for communicating with at least one of a plurality of Service Requester Nodes. Thereby, the UDS is equipped with at least one Protocol Handler Module (hereinafter referred to as PHM) enabled for handling at least one of these different communication protocols. Provided that there is more than one of these PHM, a sort of protocol discrimination function is required to determine which particular PHM should deal with a received query, answer, or other message under particular protocol premises. Said protocol discrimination function is carried out by an additional Protocol Discriminator Module (hereinafter referred to as PDM) as shown in Fig. 3a and Fig. 3b, and which is only required in case that more than one PHM exists. For instance, the UDS (such as UDS-1 or UDS-2) may be able to interpret queries and submit responses with support of telecommunication protocols preferably operating in accordance with at least one of "Domain Name Server" (DNS) protocol, "Light-Weight Directory Access Protocol" (LDAP), Radius protocol, or Diameter protocol. These protocols are referred to in a non-restrictive manner, to merely outline the clear advantage of having a UDS arranged for supporting several protocols that might be changed by replacing or adding individual Protocol Handler Modules accompanied by amendments carried out only in the Protocol Discriminator Module.

The Fig. 3a shows a preferred embodiment of UDS (10) comprising several PHM (29) (further referred as 1-3, m) and a unique PDM (30). A skilled person will appreciate that similar embodiments may be achieved by separating a number of PHM (29) and PDM (30) integrated in a so-called Protocol Adaptation Entity (32) (hereinafter PAE). As shown in Fig. 3b, a dedicated PHM could be reserved at the PAE for internal communication with the UDS (10) wherein there is also a unique dedicated PHM (34). Fig. 3b also shows the UDS having an internal database (36).

Additional advantages may be obtained if secondary databases, namely the UDS, are geographically nearer to the requester of information, the so-called Service Requester Node (28), in order to speed up the resolution process, though said advantage is not an essential feature.

Irrespective of geographical location, first queries are requested from secondary databases like the UDS whereas primary databases are further queried only where a first query was successfully answered. This procedure can be useful to avoid the overload of primary databases due to queries for non-existing users, generally known as "Denial of Service" (DOS) attacks. This solution needs no special security protection different from any other standard node in the operator network, having its deployment internal to the network operator or in a trust-relationship environment like that of partners operating in different countries reusing certain infrastructure.

The architecture shown in Fig. 1 as well as the essential features and advantages described above for the UDS are suitable for use in telecommunication systems operating in accordance with the 3^{rd} Generation Partnership Project (3GPP). More specifically, the UDS is operable as a Service Locator Function (SLF) as described in the Annex F of the Technical Specification (TS) 23.228 of said 3GPP.

As described in said TS, the Home Subscriber Server (HSS) currently holding subscriber specific data, like user location or authentication parameters for example, must be identified during the Registration and the Session or Call Establishment, as most probably there are more than one HSS in the operator's network. The identification of a particular HSS is required for an Interrogating Call Status Control Function (I-CSCF) node and for a Serving Call Status Control Function (S-CSCF) node, in order to get the actual name and/or address of the HSS in charge of a given subscriber. More specifically, the I-CSCF node needs the HSS identification during both the Registration and the Session or Call Establishment, whereas the S-CSCF node needs such HSS identification only during the Registration. This description simply refers to a Call Status Control Function (CSCF) node, for the sake of simplicity, where the explanation may well apply to the Interrogating or to the Serving CSCF.

In this scenario, the different HSS wherein subscribers are distributed are arranged for acting as primary databases as the ones previously shown in Fig. 1, and referred to in this application as Server-i (being i from 1 to n), whereas the CSCF node is arranged for acting as the aforementioned Service Requester Node (28). In accordance with the invention, the aforementioned UDS (10) is then operable as said Service Locator Function (SLF) acting as a secondary database for receiving queries from the CSCF, encountering the HSS in charge of a given subscriber, and answering the result to said CSCF.

Therefore, a UDS arranged for acting as an SLF comprises at least one Protocol Handler Module for handling the received and answered queries from and to the CSCF node. Moreover, provided that the protocol suitable for communication between SLF and HSS is other than the one between SLF and CSCF, the UDS arranged for acting as an SLF comprises another Protocol Handler Module (PHM) for handling updates or downloads with the HSS. As already mentioned, a Protocol Discriminator Module (PDM) is included in a UDS where more than one PHM is used.

For instance, the interface between a CSCF and a UDS, the latter arranged for acting as an SLF, includes an operation for querying the Subscription Locator from the CSCF, and a response for providing the HSS address towards the CSCF. Specifically, by sending an operation like SLF_QUERY, the CSCF indicates the subscriber identity (received during the Registration or the Session or Call Establishment) for which an HSS is looked for. Then, by returning the operation SLF_RESP the UDS acting as an SLF responds with the HSS name and/or address for the CSCF to continue by querying the given HSS. Alternatively, the operation SLF_RESP may indicate a new user identifier with an indication that another query must be dome. This indication may either comprise the address for the new query with an indication of the reason, or merely be a reason for a new query. The former indication type is used for Number Portability, for instance, whereas the latter implies that the address of the new server must be found out by the querying entity. Provided that the exemplary DNS protocol above, between a CSCF and an SLF, is also used between the SLF and the HSS, the operation SLF_UPDATE_REQUEST may be used for requesting user data from each particular HSS. Then, the operation SLF_UPDATE is used for updating the UDS, acting as an SLF, from an HSS at any time a change occurs in such HSS.

Optionally during the registration flow, the Interrogating CSCF (I-CSCF) may forward the HSS address towards a Serving CSCF (S-CSCF) to simplify the S-CSCF behaviour to find the HSS. In case that the received user identifier does not correspond to any known user the corresponding error is returned.

Under the exemplary use of a DNS protocol, though also applicable under other protocols like DIAMETER or RADIUS for example, the updating of a secondary database like a UDS acting as an SLF from primary databases like the HSS comprises dedicated means anticipated in Fig. 4.

The SLF_UPDATE_REQUEST operation, namely UPDATE_Req in Fig. 4, provides the means for the querying entities to indicate specific operations requested on all or a set of identifiers space. Said operation comprises means for requesting "all user data" or "specific user data" for one or a set of users. For example, only Circuit Switching (hereinafter CS) access related data, or only Packet Switching (hereinafter PS) access related data, or only Internet protocol Multimedia (hereinafter IM) related data. Said operation further comprises means for requesting a "set of specific data" Service Network (hereinafter SN) related, what in fact may include a set of services, for one or a set of users. Moreover, said operation also comprises means for requesting only a specific type of identifiers like, for example and in a non-restrictive manner, E.164 numbers or SIP_urls. Still further, said operation comprises means for requesting only identifiers belonging to a specific identification space like, for instance, only identifiers into the acme.land domain.

Correspondingly, the SLF_UPDATE response operation, namely UPDATE_Ind in Fig. 4, provides the means for indicating to the querying entities that "all user data" or only "specific user data" are updated for a specific user or for a set of users.

On the other hand, the range of entities to be requested for updating as well as the range of entities being effectively updated in respect of a unique service, a set of services, or all the services for one, a group of, or all subscribers, as described above with reference to Fig. 4, also has applicability in this case.

In summary, the SLF_UPDATE_REQUEST operation, namely the UPDATE_Req in Fig. 4, provides means to indicate:
- Range of users, in terms of one user, a set of users under some grouping condition, or all users.
- Range of services, in terms of a specific service, a set of services, or all services.
- Range of entities to be queried, in terms of one entity, a set of entities under some conditions, that is Multicast, or all entities, namely Broadcast. Correspondingly, the SLF_UPDATE response operation, the UPDATE_Ind in Fig. 4, provides means to indicate:

- Range of users, in terms of one user, a set of users under some grouping condition, or all users.
- Range of services, in terms of a specific service, a set of services, or all services.
- Range of entities to be updated, in terms of one entity, a set of entities under some conditions, that is Multicast, or all entities, namely Broadcast.

When a new UDS acting as an SLF is introduced in the network, as anticipated above with reference to Fig. 4, a query is launched to all nodes providing service, that is, to all the primary databases, namely broadcast to primary databases like HSS. On the other hand, the removal of a querying entity like the UDS from the network may be preceeded by an alert message OUT_OF_SERVICE_like towards all cooperating primary databases or, alternatively, additional presence-related mechanisms ACTIVITY_TEST_like are provided at the primary databases to be periodically invoked. A similar approach is used in accordance with the invention where any primary database like HSS is removed from the network, either the aforementioned mechanism OUT_OF_SERVICE_like, or the respective ACTIVITY_TEST_like related mechanism. Regarding the introduction, removal or modification of user data, the aforementioned UPDATE_Ind includes appropriate indicator values as to unambiguously interpret the type of updating.

Even though the request for updating as well as the updating itself are intentionally and preferably carried out on primary and secondary database premises, it might occur as well that the secondary database UDS does not know some specific user data recently requested. In this situation, and inasmuch as the UDS knows how to locate another primary or secondary database holding such data, a new query is issued from the receiver UDS towards another UDS or towards another external database. This is especially useful for Number Portability support for which an additional explanatory use case is further provided in this description.

An aspect of particular interest is the optimal behaviour of an UDS according to the invention acting as an SLF and thus inter-working with the CSCF during the Registration phase. The explanations following this are aimed with reference to interfaces and entities in Fig. 1. First, the CSCF (Service Requester Node) receives a REGISTER request (S-10) and must initiate a query for the location of the subscriber's data. Second, the CSCF sends an operation SLF_QUERY_like (S-20) to the SLF (UDS-1) and includes the subscriber identity as stated in the REGISTER request. The protocol to use is not significant at this point since the UDS according to the invention may be equipped with a plurality of Protocol Handler Modules (PHM), as shown in Fig. 3a; in a manner such as being appropriate for communicating with DNS, DIAMETER, RADIUS or any other suitable protocol. Moreover, the aforementioned Protocol Adaptation Entity (32) in Fig. 3b may be interposed between the CSCF and the UDS to this end. Third, and still with reference to Fig. 1, the SLF (UDS-1) looks up its own database contents as shown in Fig. 2 by way of example for the queried subscriber identity. Fourth, and again with reference to Fig. 1, the SLF (UDS-1) answers (S-30) with the HSS name in which the subscriber's data can be found. Fifth, the CSCF preferably launches a query directly to the HSS (Server-3) (S-40). Alternatively to the fifth step above and under certain call premises, the CSCF (Service Requester Node) (28) may proceed by returning the query result (S-45) to the External Client (26) having issued the Registration request, for said External Client querying (S-50) the appropriate HSS (Server-3).

Apart from what has been stated above for the case of receiving a Registration request at a CSCF entity, a similar approach and behavior is expected from a UDS according to the invention for the case of an I-CSCF node participating in a Session or Call Establishment.

A further advantage of using a UDS according to the invention as an SLF is how easily specific queries can be performed to External Databases (38) and thus supporting number portability queries in both scenarios: at a donor network, and at an originating network.

At a donor network the UDS concept can be used to handle number and name portability under some conditions. It might well happen that, as it is currently regulated in some scenarios, some flows get to an I-CSCF of a network not currently holding the user's subscription. When such an I-CSCF queries the SLF, a discrimination must be applied in this step to avoid those queries from a ported user can get into an HSS of this network. With reference to Fig. 1, the I-CSCF (Service Requester Node) receives an INVITE request (S-10) and must query for the location of the subscriber's data. The I-CSCF sends a SLF_QUERY (S-20) to the SLF (UDS-1) and includes as a parameter the subscriber identity previously received in the INVITE request. The SLF (UDS-1) looks up its own local database for the queried subscriber identity. An exemplary entry for identifier "2.2.3.4.9.e164.arpa" in Fig. 2 discloses that this user is ported with an indication of type "Forward_query_to_Ex_Db" as server identifier. Then, the SLF (UDS-1) queries the Portability DataBase (External Database) (38), as represented in Fig. 1 with interface S-25, and obtains from said Portability DataBase the identifier to be used for contacting the user. Next, the SLF (UDS-1) answers (S-30) to the I-CSCF (Service Requester Node) with an address or URL for reaching the said subscriber. The I-CSCF may now order to redirect the INVITE message to the network where the user has been ported.

On the other hand, the UDS can be also advantageous for solving number portability in originating networks where the query is actually performed from a Serving Call Status Control Function (S-CSCF) entity. In this respect, the same principles apply for querying from an S-CSCF to an UDS, which is acting as an SLF, as for querying from the above indicated I-CSCF.

Many other scenarios can make advantageous use of the UDS in accordance with the invention. For instance, said UDS may offer substantial support for a Virtual Network Operator owning its own HSS, said own HSS being identified through a UDS acting as an SLF in a non-virtual network addressed as a corresponding network resolution domain.

Another instance of the applicability of a UDS according to the invention is the Registration of users in external Internet protocol Multimedia Service Providers (hereinafter IMSP). The UDS concept can be used following the same principles as above but, in this case, the contact name indicated by the user may be applied for identifying the domain where the IMSP provides the service. In other words, the Home operator acts as a sort of broker, namely a Service provider that provides contact addresses for the user, based on any preferences of this user, or provides a redirection service as for the case of Number or Name Portability.

Still another advantageous use case turns up as considering queries and responses throughout the so-called Sh interface between an HSS and an Application Server (hereinafter AS) in an IP Mobility Management (IPMM) architecture. Said Application servers must have access to user data stored in the HSS, but it is not feasible that they know the addresses of all the HSS for all users, as the case was for I-CSCF or S-CSCF. Therefore, the same UDS according to the present invention seems to be applicable also for this case where an entity like said UDS may be placed between HSS and AS for the purpose of redirecting the queries from AS towards the correct HSS on per user and/or service requested.

Advantages and different scenarios for use have been identified above, most of them related to the newer generations of wireless systems and especially regarding their connectivity with newer Multimedia and Internet related services. However, there is still another advantageous application of the UDS to classical GSM or UMTS identifiers. The UDS concept can be used using the same principles but, in this case, the contact name indicated by the user may be the IMSI or the MSISDN depending on the specific message flow. This can be done based on mapping these numbers to routable names as already proposed in ENUM protocol, which maps E.164 numbers to routable names. In this particular case and with reference to Fig. 1, the querying entities represented by the Service Requester Nodes are the Mobile Switching Centre server (MSC), the Gateway MSC server (GMSC), the Serving GSM Server Node (SGSN), or the Gateway GSM Server Node (GGSN). These entities are cited for example and in a non-restrictive manner. Moreover, in this classical GSM or UMTS environment HLR and HSS are the primary databases represented by Server-1 to Server-n. The Service Requester Node could also be a Signalling Gateway; a GPRS supporting node; an Open Service Architecture Service Capability Server; a Multimedia Messaging Server; or a CAMEL Gateway Server.

Although preferred embodiments of the present invention have been illustrated in the accompanying Drawings and described in the foregoing Detailed Description of Preferred Embodiments, it will be understood that the invention is not limited to the embodiments disclosed, but it is capable of numerous rearrangements, modifications and substitutions without departing from the scope of the invention as set forth and defined by the following claims.

## Claims

1. A User Distribution Server (UDS) (10; 12) in a network resolution domain, comprising a plurality of user identifiers per subscriber basis intended for identifying a user under different service environments, said UDS arranged for determining a specific network server (14, 16; 18, 20) in charge of said user under a particular service environment, and **characterized in that** the UDS acts as a secondary database comprising
(a) means for recovering (44) user identifiers and necessary service data from specific network servers (14, 16; 18, 20) acting as primary databases as well as from other UDS (12; 10) in the network resolution domain;
(b) storage (36) for user identifiers and necessary service data, *including service indicators,* per specific network server (14, 16; 18 20) *and per user basis*;
(c) means for receiving (40) and processing service requests from a Service Requester Node (28) or from another UDS (12; 10) in the resolution domain *for* a *given user under* a *particular service environment;* and
(d) means for answering (42) to the Service Requester Node (28) or to another UDS (12; 10):
(d1) *an identifier for addressing* the specific network server in charge of said user under a particular service environment, or
(d2) a list of possible network server *identifiers* if a redundant configuration exists, or
(d3) a new user identifier with indication that another query on said new identifier in another server is necessary, and optionally indicating the reason behind.

2. The User Distribution Server (UDS) in claim 1, wherein the means a) (44) include means for informing said UDS (10) about needs for updating user identifiers and/or necessary service data at indication and from primary databases (14, 16) or another UDS (12).

3. The User Distribution Server (UDS) in claim 2, wherein the means a) (44) include means for said UDS (10) registering into and withdrawing from all network servers intended for acting as primary databases (14, 16) or *another UDS* (12).

4. The User Distribution Server (UDS) in claim 3, wherein the means a) (44) include means for indicating recovery preferences for recovering user identifiers and/or necessary service data for all served users, for a specific set of users, or only for a particular user.

5. The User Distribution Server (UDS) in claim 4, wherein the means a) (44) further include means for recovering user identifiers and/or necessary service data for at least on set of:
(a) identifiers of a specific type amongst a plurality of valid identifier types;
(b) identifiers used in specific domains; and
(c) identifiers belonging to specific identification spaces in a domain.

6. The User Distribution Server (UDS) in claim 5, wherein data sensitive to temporary validity per specific network service include a "Time To Live" (TTL) parameter intended for determining the needs for data recovery from primary databases (14, 16; 18, 20).

7. The User Distribution Server (UDS) in claim 5, further comprising at least one protocol handler module (29) and, in case more than one protocol handler module exists, a protocol discriminator module (30), each protocol handler module in charge of a particular telecommunications protocol.

8. The User Distribution Server (UDS) in claim 7, wherein at least one "Domain Name Server (DNS)" related protocol handler module is comprised.

9. The User Distribution Server (UDS) in claim 7, wherein at least one "Diameter" related protocol handler module is comprised.

10. The User Distribution Server (UDS) in claim 7, wherein at least one "Light-Weight Directory Access Protocol (LDAP)" related protocol handler module is comprised.

11. The User Distribution Server (UDS) in claim 7, wherein at least one "Radius" related protocol handler module is comprised.

12. The User Distribution Server (UDS) in claim 7, further comprising protocol and processing means for solving the service request using an external database (38) not intended for acting as primary database or as another UDS.

13. The User Distribution Server (UDS) in claim 12, wherein said external database (38) is a number portability database.

14. A telecommunications system comprising the User Distribution Server (UDS) (10; 12) of claim 1, **characterized in that** relevant user identifiers in at least one of a plurality of primary databases (14; 16; 18; 20) may be submitted for updating to one specific UDS (10; 12), to a group of UDS (10, 12), or to all UDS (10-12) known at said at least one primary database.

15. The telecommunications system in claim 14, wherein at least one of a plurality of primary databases (14; 16; 18; 20) is arranged for receiving UDS recovery preferences from one specific UDS (10; 12), from a group of UDS (10., 12), or from all UDS (10-12) known at said at least one primary database, and for updating each UDS accordingly with each recovery preferences.

16. The telecommunications system in claim 15, wherein the UDS (10; 12) acts as a Subscription Locator Function (SLF).

17. The telecommunications system in claim 15, wherein at least one of a plurality of specific servers acting as primary databases (14; 16; 18; 20) is a Home Subscription Server (HSS).

18. The telecommunications system in claim 15, wherein at least one of a plurality of specific servers acting as primary databases (14; 16; 18; 20) is a Presence Server.

19. The telecommunications system in claim 15, wherein at least one of a plurality of Service Requester Nodes (28) is an Interrogating Call Status Control Function (I-CSCF).

20. The telecommunications system in claim 15, wherein at least one of a plurality of Service Requester Nodes (28) is a Serving Call Status Control Function (S-CSCF).

21. The telecommunications system in claim 15, wherein at least one of a plurality of Service Requester Nodes (28) is a Mobile Switching Center (MSC).

22. The telecommunications system in claim 15, wherein at least one of a plurality of Service Requester Nodes (28) is a Signalling Gateway.

23. The telecommunications system in claim 15, wherein at least one of a plurality of Service Requester Nodes (28) is a GPRS Supporting Node.

24. The telecommunications system in claim 15, wherein at least one of a plurality of Service Requester Nodes (28) is an Application Server (AS) intended for multimedia related use.

25. The telecommunications system in claim 15, wherein at least one of a plurality of Service Requester Nodes (28) is an Open Service Architecture Service Capability Server.

26. The telecommunications system in claim 15, wherein at least one of a plurality of Service Requester Nodes (28) is a Multimedia Messaging Server.

27. The telecommunications system in claim 15, wherein at least one of a plurality of Service Requester Nodes (28) is a CAMEL Gateway Server.

28. The telecommunications system in claim 15, wherein at least one of a plurality of external databases (38) used for resolution is a Domain Name Server.

29. The telecommunications system in claim 15, wherein at least one of a plurality of external databases (38) used for resolution is a database system based on Light-Weight Directory Access Protocol (LDAP).

30. The telecommunications system in claim 15, wherein at least one of a plurality of external databases (38) used for resolution is a number portability database.

31. A method in a network resolution domain, wherein a plurality of user identifiers per subscriber basis are used for identifying a user under different service environments, and wherein the User Distribution Server (UDS) (10; 12) in claim 1 is disposed for determining a specific network server (14; 16; 18; 20) in charge of each user under a particular service environment, the method **characterized in that** it comprises the steps of:
(a) recovering (P-11, P-21, P-31, P-n1; P-00) at the UDS (10) user identifiers and necessary service data from specific network servers (14; 16; 18; 20) acting as primary databases as well as from other UDS (12) in the network resolution domain;
(b) storing at the UDS (10) user identifiers and necessary service data *that include service indicators for* each user per specific network server;
(c) receiving (S-20; P-00) and processing service requests from a Service Requester Node (28) or from another UDS (12) in the resolution domain *for* a *given* user under *a particular service environment*; and
(d) answering (S-30; P-00) to the Service Requester Node (28) or to another UDS (12):
(d1) *an identifier for addressing* (S-40) the specific network server (20) in charge of said user under a particular service environment, or
(d2) a list of possible network server *identifiers* if a redundant configuration exists, or
(d3) a new user identifier with indication that another query on said new identifier in another server is necessary, and optionally indicating the reason behind.

32. The method in claim 31, further including the step of informing (P-11; P-21; P-31; P-n1) to at least one UDS (10) about needs for updating user identifiers and/or necessary service data at indication and from primary databases (16; 14; 20; 18) or another UDS (12).

33. The method in claim 32, alternatively including the steps of registering (P-11; P-21; P-31; P-n1) a UDS (10) into, and withdrawing (P-11; P-21; P-31; P-n1) a UDS (10) from, all network servers (16; 14; 20; 18) intended for acting as primary databases.

34. The method in claim 33, further including the steps of indicating (P-11; P-21; P-31; P-n1) UDS recovery preferences to at least one primary database (16; 14; 20; 18) for recovering user identifiers and/or necessary service data for all served users, for a specific set of users, or only for a particular user.

35. The method in claim 34, further including the steps of receiving (P-11; P12) UDS recovery preferences from one specific UDS (10; 12), from a group of UDS (10, 12), or from all UDS (10-12) known at an at least one primary database (16), and updating each UDS from said at least one primary database accordingly with each recovery preferences.

## Patentansprüche

1. Benutzer-Verteilerserver (UDS) (10; 12) in einer auflösenden Netzdomäne, umfassend eine Vielzahl von Benutzerkennungen pro Teilnehmerbasis, die zum Identifizieren eines Benutzers unter unterschiedlichen Dienstumgebungen gedacht sind, wobei der UDS zum Bestimmen eines spezifischen Netzwerk-Servers (14, 16; 18, 20), der für den Benutzer unter einer bestimmten Dienstumgebung zuständig ist, eingerichtet ist, **dadurch gekennzeichnet, daß** der UDS als eine Sekundärdatenbank fungiert, umfassend:
(a) Mittel zum Wiederherstellen (44) von Benutzerkennungen und notwendigen Dienstedaten von spezifischen als Primärdatenbanken fungierenden Netzwerk-Servem (14, 16; 18, 20) sowie von anderen UDS (12; 10) in der auflösenden Netzdomäne;
(b) einen Speicher (36) für Benutzerkennungen und notwendige Dienstedaten, einschließlich Dienstkennungen, pro spezifischem Netzwerk-Server (14, 16; 18, 20) und pro Benutzerbasis;
(c) Mittel zum Empfangen (40) und Verarbeiten von Dienstanforderungen von einem Dienstanforderungsknoten (28) oder von einem anderen UDS (12; 10) in der auflösenden Domäne für einen gegebenen Benutzer unter einer bestimmten Dienstumgebung; und
(d) Mittel zum Antworten (42) an den Dienstanforderungsknoten (28) oder einen anderen UDS (12; 10):
(d1) eine Kennung zum Adressieren des spezifischen Netzwerk-Servers, der für den Benutzer unter einer bestimmten Dienstumgebung zuständig ist, oder
(d2) eine Liste möglicher Netzwerk-Server-Kennungen, wenn eine redundante Konfiguration besteht, oder
(d3) eine neue Benutzerkennung mit der Angabe, daß eine andere Abfrage über die neue Kennung in einem anderen Server erforderlich ist, und wahlweise mit Angabe des Grundes hierfür.

2. Benutzer-Verteilerserver (UDS) nach Anspruch 1, wobei die Mittel a) (44) Mittel zum Informieren des UDS (10) über das Erfordernis zum Aktualisieren von Benutzerkennungen und/oder erforderlichen Dienstedaten bei Angabe und von Primärdatenbanken (14, 16) oder einem anderen UDS (12) umfassen.

3. Benutzer-Verteilerserver (UDS) nach Anspruch 2, wobei die Mittel a) (44) Mittel zum Registrieren des UDS (10) in und zum Abziehen aus sämtlichen Netzwerk-Servem, die zum Fungieren als Primärdatenbanken (14, 16) oder als ein anderer UDS (12) gedacht sind, umfassen.

4. Benutzer-Verteilerserver (UDS) nach Anspruch 3, wobei die Mittel a) (44) Mittel zum Angeben von Wiederherstellungspräferenzen zum Wiederherstellen von Benutzerkennungen und/oder notwendigen Dienstedaten für sämtliche bedienten Benutzer, für eine bestimmte Benutzergruppe oder nur für einen bestimmten Benutzer umfassen.

5. Benutzer-Verteilerserver (UDS) nach Anspruch 4, wobei die Mittel a) (44) weiterhin Mittel zum Wiederherstellen von Benutzerkennungen und/oder notwendigen Dienstedaten umfassen, für mindestens eine Gruppe aus:
(a) Kennungen eines spezifischen Typs unter einer Vielzahl von gültigen Kennungstypen;
(b) Kennungen, die in spezifischen Domänen verwendet werden; und
(c) Kennungen, die zu spezifischen Identifikationsleerzeichen in einer Domäne gehören.

6. Benutzer-Verteilerserver (UDS) nach Anspruch 5, wobei Daten, die gegenüber einer temporären Gültigkeit pro spezifischem Netzwerkdienst empfindlich sind, einen "Time-to-Live"-Parameter (TTL) enthalten, der zur Bestimmung der Erfordernisse für die Datenwiederherstellung aus Primärdatenbanken (14, 16; 18, 20) gedacht ist.

7. Benutzer-Verteilerserver (UDS) nach Anspruch 5, weiterhin umfassend mindestens ein Protokollbehandlungsmodul (29) und, wenn mehr als ein Protokollbehandlungsmodul existiert, ein Protokolldiskriminatormodul (30), wobei jedes Protokollbehandlungsmodul für ein bestimmtes Telekommunikationsprotokoll zuständig ist.

8. Benutrer-Verteilerserver (UDS) nach Anspruch 7, wobei mindestens ein auf einen "Domänennamen-Server (DNS)" bezogenes Protokollbehandlungsmodul umfaßt ist.

9. Benutzer-Verteilerserver (UDS) nach Anspruch 7, wobei mindestens ein auf einen "Durchmesser" bezogenes Protokollbehandlungsmodul umfaßt ist.

10. Benutzer-Verteilerserver (UDS) nach Anspruch 7, wobei mindestens ein auf ein "Light-Weight-Directory-Access-Protokoll" (LDAP) bezogenes Protokollbehandlungsmodul umfaßt ist.

11. Benutzer-Verteilerserver (UDS) nach Anspruch 7, wobei mindestens ein auf einen "Radius" bezogenes Protokollbehandlungsmodul umfaßt ist.

12. Benutzer-Verteilerserver (UDS) nach Anspruch 7, weiterhin umfassend Protokoll- und Verarbeitungsmittel zum Auflösen der Dienstanforderung unter Verwendung einer externen Datenbank (38), die nicht zum Fungieren als Primärdatenbank oder als ein anderer UDS gedacht ist.

13. Benutzer-Verteilerserver (UDS) nach Anspruch 12, wobei die externe Datenbank (38) eine Nummernportabilitätsdatenbank ist.

14. Telekommunikationssystem umfassend den Benutzer-Verteilerserver UDS) (10; 12) gemäß Anspruch 1, **dadurch gekennzeichnet, daß** relevante Benutzerkennungen in mindestens einer aus einer Vielzahl von Primärdatenbanken (14; 16; 18; 20) zum Aktualisieren an einen spezifischen UDS (10; 12), an eine Gruppe von UDS (10, 12) oder an sämtliche UDS (10-12), die in der mindestens einen Primärdatenbank bekannt sind, gesendet werden.

15. Telekommunikationssystem nach Anspruch 14, wobei mindestens eine einer Vielzahl von Primärdatenbanken (14; 16; 18; 20) zum Empfangen von UDS-Wiederherstellungspräferenzen von einem spezifischen UDS (10; 12), von einer Gruppe von UDS (10, 12) oder von sämtlichen UDS (10-12), die in der mindestens einen Primärdatenbank bekannt sind, sowie zum entsprechenden Aktualisieren jedes UDS mit jeder Wiederherstellungspräferenz eingerichtet ist.

16. Telekommunikationssystem nach Anspruch 15, wobei der UDS (10; 12) als eine Teilnahmelokalisierfunktion (Subscription Locator Function - SLF) fungiert.

17. Telekommunikationssystem nach Anspruch 15, wobei mindestens einer aus einer Vielzahl spezifischer Server, die als Primärdatenbanken (14; 16; 18; 20) fungieren, ein Heimatteilnahmeserver (Home Subscription Server - HSS) ist.

18. Telekommunikationssystem nach Anspruch 15, wobei mindestens einer aus einer Vielzahl spezifischer Server, die als Primädatenbanken (14; 16; 18; 20) fungieren, ein Anwesenheitsserver ist.

19. Telekommunikationssystem nach Anspruch 15, wobei mindestens einer aus einer Vielzahl von Dienstanforderungsknoten (28) eine I-CSCF-Funktion (Interrogating Call Status Control Function) ist.

20. Telekommunikationssystem nach Anspruch 15, wobei mindestens einer aus einer Vielzahl von Dienstanforderungsknoten (28) eine S-CSCF-Funktion (Serving Call Status Control Function) ist.

21. Telekommunikationssystem nach Anspruch 15, wobei mindestens einer aus einer Vielzahl von Dienstanforderungsknoten (28) eine Mobilfunkvermittlungsstelle (MSC) ist.

22. Telekommunikationssystem nach Anspruch 15, wobei mindestens einer aus einer Vielzahl von Dienstanforderungsknoten (28) ein Signalisierungs-Gateway ist.

23. Telekommunikationssystem nach Anspruch 15, wobei mindestens einer aus einer Vielzahl von Dienstanforderungsknoten (28) ein GPRS-Support-Knoten ist.

24. Telekommunikationssystem nach Anspruch 15, wobei mindestens einer aus einer Vielzahl von Dienstanforderungsknoten (28) ein Anwendungsserver (AS) ist, der zur Multimedia-bezogenen Verwendung gedacht ist.

25. Telekommunikationssystem nach Anspruch 15, wobei mindestens einer aus einer Vielzahl von Dienstanforderungsknoten (28) ein Open-Service-Arch itecture-Service-Capability-Server ist.

26. Telekommunikationssystem nach Anspruch 15, wobei mindestens einer aus einer Vielzahl von Dienstanforderungsknoten (28) ein Multimedia-Messaging-Server ist.

27. Telekommunikationssystem nach Anspruch 15, wobei mindestens einer aus einer Vielzahl von Dienstanforderungsknoten (28) ein CAMEL-Gateway-Server ist.

28. Telekommunikationssystem nach Anspruch 15, wobei mindestens eine aus einer Vielzahl von für die Auflösung verwendeten externen Datenbanken (38) ein Domänennamen-Server ist.

29. Telekommunikationssystem nach Anspruch 15, wobei mindestens eine aus einer Vielzahl von für die Auflösung verwendeten externen Datenbanken (38) ein Datenbanksystem basierend auf dem Light-Weight-Directory-Access-Protokoll (LDAP) ist.

30. Telekommunikationssystem nach Anspruch 15, wobei mindestens eine aus einer Vielzahl von für die Auflösung verwendeten externen Datenbanken (38) eine Nummernportabilitätsdatenbank ist.

31. Verfahren in einer auflösenden Netzdomäne, wobei eine Vielzahl von Benutzerkennungen pro Teilnehmerbasis zum Identifizieren eines Benutzers unter unterschiedlichen Dienstumgebungen verwendet werden, und wobei der Benutzer-Verteilerserver (UDS) (10; 12) gemäß Anspruch 1 zum Bestimmen eines spezifischen Netzwerk-Servers (14, 16; 18, 20) eingerichtet ist, der für jeden Benutzer unter einer bestimmten Dienstumgebung zuständig ist, wobei das Verfahren **dadurch gekennzeichnet ist, daß** es die Schritte umfaßt:
(a) Wiederherstellen (P-11, P-21, P-31, P-n1; P-00) im UDS (10) von Benutzerkennungen und notwendigen Dienstedaten von spezifischen als Primärdatenbanken fungierenden Netzwerk-Servern (14; 16; 18; 20) sowie von anderen UDS (12) in der auflösenden Netzdomäne;
(b) Speichern im UDS (10) von Benutzerkennungen und notwendigen Dienstedaten, die Dienstkennungen für jeden Benutzer pro spezifischem Netzwerk-Server enthalten;
(c) Empfangen (S-20; P-00) und Verarbeiten von Dienstanforderungen von einem Dienstanforderungsknoten (28) oder von einem anderen UDS (12) in der auflösenden Domäne für einen gegebenen Benutzer unter einer bestimmten Dienstumgebung; und
(d) Antworten (S-30; P-00) an den Dienstanforderungsknoten (28) oder einen anderen UDS (12):
(d1) eine Kennung zum Adressieren (S-40) des spezifischen Netzwerk-Servers (20), der für den Benutzer unter einer bestimmten Dienstumgebung zuständig ist, oder
(d2) eine Liste möglicher Netzwerk-Server-Kennungen, wenn eine redundante Konfiguration besteht, oder
(d3) eine neue Benutzerkennung mit der Angabe, daß eine andere Abfrage über die neue Kennung in einem anderen Server erforderlich ist, und wahlweise mit Angabe des Grundes hierfür.

32. Verfahren nach Anspruch 31, weiterhin umfassend den Schritt des Informierens (P-11; P-21; P-31; P-n1) mindestens eines UDS (10) über das Erfordernis zum Aktualisieren von Benutzerkennungen und/oder erforderlichen Dienstedaten bei Angabe und von Primärdatenbanken (16; 14; 20; 18)) oder einem anderen UDS (12).

33. Verfahren nach Anspruch 32, alternativ umfassend die Schritte des Registrierens (P-11; P-21; P-31; P-n1) eines UDS (10) in und des Abziehens (P-11; P-21; P-31; P-n1) eines UDS (10) aus sämtlichen Netzwerk-Servem (16; 14; 20; 18), die zum Fungieren als Primärdatenbanken gedacht sind.

34. Verfahren nach Anspruch 33, weiterhin umfassend die Schritte des Angebens (P-11; P-21; P-31; P-n1) von UDS-Wiederherstellungspräferenzen an mindestens eine Primädatenbank (16; 14; 20; 18) zum Wiederherstellen von Benutzerkennungen und/oder notwendigen Dienstedaten für sämtliche bedienten Benutzer, für eine bestimmte Benutzergruppe oder nur für einen bestimmten Benutzer.

35. Verfahren nach Anspruch 34, weiterhin umfassend die Schritte des Empfangens (P-11; P12) von UDS-Wiederherstellungspräferenzen von einem spezifischen UDS (10; 12), von einer Gruppe von UDS (10, 12) oder von sämtlichen UDS (10-12), die in mindestens einer Primärdatenbank (16) bekannt sind, sowie des entsprechenden Aktualisierens jedes UDS aus der mindestens einen Primärdatenbank mit jeder Wiederherstellungspräferenz.

## Revendications

1. Serveur de distribution d'utilisateur (UDS) (10 ;12) dans un domaine de résolution de réseau, comprenant une pluralité d'identifiants d'utilisateur par abonné prévus pour identifier un utilisateur dans des environnements de service différents, ledit UDS étant agencé pour déterminer un serveur de réseau spécifique (14,16 ;18,20) en charge dudit utilisateur dans un environnement de service particulier et **caractérisé en ce que** l'UDS fonctionne comme une base de données secondaire comprenant
(a) un moyen pour récupérer (44) des identifiants d'utilisateur et des données de service nécessaires provenant de serveurs de réseau spécifiques (14,16 ;18,20) fonctionnant comme des bases de données primaires ainsi que d'autres UDS (12 ;10) dans le domaine de résolution de réseau ;
(b) une mémoire (36) pour les identifiants d'utilisateur et les données de service nécessaires, incluant des indicateurs de service, par serveur de réseau spécifique (14,16 ;18,20) et par utilisateur ;
(c) un moyen pour recevoir (40) et traiter des demandes de service provenant d'un Noeud Demandeur de Service (28) ou d'un autre UDS (12 ;10) dans le domaine de résolution pour un utilisateur donné dans un environnement de service particulier ; et
(d) un moyen pour répondre (42) au Noeud Demandeur de Service (28) ou à un autre UDS (12 ;10) :
(d1) un identifiant pour s'adresser au serveur de réseau spécifique en charge dudit utilisateur dans un environnement de service particulier, ou
(d2) une liste d'identifiants de serveurs de réseau possibles si une configuration redondante existe, ou
(d3) un nouvel identifiant d'utilisateur indiquant qu'une autre interrogation relative audit nouvel identifiant dans un autre serveur est nécessaire et, optionnellement, indiquant pour quelle raison.

2. Serveur de distribution d'utilisateur (UDS) de la revendication 1, dans lequel le moyen a) (44) inclut un moyen pour informer ledit UDS (10) sur les besoins de mise à jour des identifiants d'utilisateur et/ou des données de service nécessaires à l'indication et provenant des bases de données primaires (14,16) ou d'un autre UDS (12).

3. Serveur de distribution d'utilisateur (UDS) de la revendication 2, dans lequel le moyen a) (44) inclut un moyen pour que ledit UDS (10) s'enregistre dans et se retire de tous les serveurs de réseau enclins à fonctionner comme des bases de données primaires (14,16) ou d'un autre UDS (12).

4. Serveur de distribution d'utilisateur (UDS) de la revendication 3, dans lequel le moyen a) (44) inclut un moyen pour indiquer des préférences de récupération pour récupérer des identifiants d'utilisateur et/ou des données de service nécessaires pour tous les utilisateurs de s-servis, pour un ensemble spécifique d'utilisateurs ou seulement pour un utilisateur particulier.

5. Serveur de distribution d'utilisateur (UDS) de la revendication 4, dans lequel le moyen a) (44) inclut en outre un moyen pour récupérer les identifiants d'utilisateur et/ou les données de services nécessaires pour au moins un ensemble d' :
(a) identifiants d'un type spécifique parmi une pluralité de types d'identifiants valides ;
(b) identifiants utilisés dans des domaines spécifiques ; et
(c) identifiants appartenant à des espaces d'identification spécifiques dans un domaine.

6. Serveur de distribution d'utilisateur (UDS) de la revendication 5, dans lequel des données sensibles à la validité temporaire par service de réseau spécifique incluent un paramètre « durée de vie » (TTL) prévu pour déterminer les besoins de récupération de données à partir de bases de données primaires (14,16 ;18,20).

7. Serveur de distribution d'utilisation (UDS) de la revendication 5, comprenant en outre au moins un module gestionnaire de protocole (29) et, au cas où plus d'un module gestionnaire de protocole existe, un module de différentiation de protocole (30), chaque module gestionnaire de protocole étant en charge d'un protocole de télécommunications particulier.

8. Serveur de distribution d'utilisateur (UDS) de la revendication 7, dans lequel au moins un module gestionnaire de protocole relatif au « Serveur de nom de domaine (DNS) » est compris.

9. Serveur de distribution d'utilisateur (UDS) de la revendication 7, dans lequel au moins un module gestionnaire de protocole relatif au « DIAMETER » est compris.

10. Serveur de distribution d'utilisateur (UDS) de la revendication 7, dans lequel au moins un module gestionnaire de protocole relatif au « Protocole d'accès aux annuaires léger (LDAP) » est compris.

11. Serveur de distribution d'utilisateur (UDS) de la revendication 7, dans lequel au moins un module gestionnaire de protocole relatif au « RADIUS » est compris.

12. Serveur de distribution d'utilisateur (UDS) de la revendication 7, comprenant en outre un protocole et un moyen de traitement pour résoudre la demande de service en utilisant une base de données externe (38) non encline à fonctionner comme une base de données primaire ou un autre UDS.

13. Serveur de distribution d'utilisateur (UDS) de la revendication 12, dans lequel ladite base de données externe (38) est une base de données de portabilité de numéro.

14. Système de télécommunications comprenant le serveur de distribution d'utilisateur (UDS) (10 ;12) de la revendication 1, **caractérisé en ce que** des identifiants d'utilisateur pertinents dans au moins une d'une pluralité de bases de données primaires (14 ;16 ;18 ;20) peuvent être soumis en vue d'une mise à jour à un UDS spécifique (10 ;12), à un groupe d'UDS (10,12) ou à tous les UDS (10-12) connus dans au moins une dite base de données primaire.

15. Système de télécommunications de la revendication 14, dans lequel au moins une d'une pluralité de bases de données primaires (14 ;16 ;18 ;20) est agencée afin de recevoir des préférences de récupération UDS provenant d'un UDS spécifique (10 ;12), d'un groupe d'UDS (10,12) ou de tous les UDS (10-12) connus dans au moins une dite base de données primaire et afin de mettre à jour chaque UDS en conséquence avec chacune des préférences de récupération.

16. Système de télécommunications de la revendication 15, dans lequel l'UDS (10 ;12) fonctionne comme un SLF (Subscription Locator Function).

17. Système de télécommunications de la revendication 15, dans lequel au moins un d'une pluralité de serveurs spécifiques fonctionnant comme des bases de données primaires (14 ;16 ;18 ;20) est un HSS (Home Subscription Server).

18. Système de télécommunications de la revendication 15, dans lequel au moins un d'une pluralité de serveurs spécifiques fonctionnant comme des bases de données primaires (14 ;16 ;18 ;20) est un Serveur de Présence.

19. Système de télécommunications de la revendication 15, dans lequel au moins un d'une pluralité de Noeuds Demandeurs de Service (28) est un I-CSCF (Interrogating Call Status Control Function).

20. Système de télécommunications de la revendication 15, dans lequel au moins un d'une pluralité de Noeuds Demandeurs de Service (28) est un S-CSCF (Serving Call Status Control Function).

21. Système de télécommunications de la revendication 15, dans lequel au moins un d'une pluralité de Noeuds Demandeurs de Service (28) est un centre de commutation pour les services mobiles (MSC).

22. Système de télécommunications de la revendication 15, dans lequel au moins un d'une pluralité de Noeuds Demandeurs de Service (28) est une passerelle de signalisation.

23. Système de télécommunications de la revendication 15, dans lequel au moins un d'une pluralité de Noeuds Demandeurs de Service (28) est un noeud supportant le GPRS.

24. Système de télécommunications de la revendication 15, dans lequel au moins un d'une pluralité de Noeuds Demandeurs de Service (28) est un Serveur d'Application (AS) prévu pour une utilisation multimédia.

25. Système de télécommunications de la revendication 15, dans lequel au moins un d'une pluralité de Noeuds Demandeurs de Service (28) est un serveur de capacité de service à architecture de service ouverte.

26. Système de télécommunications de la revendication 15, dans lequel au moins un d'une pluralité de Noeuds Demandeurs de Service (28) est un Serveur de Messagerie Multimédia.

27. Système de télécommunications de la revendication 15, dans lequel au moins un d'une pluralité de Noeuds Demandeurs de Service (28) est un Serveur de Passerelle CAMEL.

28. Système de télécommunications de la revendication 15, dans lequel au moins une d'une pluralité de bases de données externes (38) utilisées pour la résolution est un Serveur de Nom de Domaine.

29. Système de télécommunications de la revendication 15, dans lequel au moins une d'une pluralité de bases de données externes (38) utilisées pour la résolution est un système de base de données basé sur le protocole d'accès aux annulaires léger (LDAP).

30. Système de télécommunications de la revendication 15, dans lequel au moins une d'une pluralité de bases de données externes (38) utilisées pour la résolution est une base de données de portabilité de numéro.

31. Procédé dans un domaine de résolution de réseau, dans lequel une pluralité d'identifiants d'utilisateur sur une base par abonné sont utilisés pour identifier un utilisateur dans des environnements de service différents et dans lequel le serveur de distribution d'utilisateur (UDS) (10 ;12) de la revendication 1 est disposé afin de déterminer un serveur de réseau spécifique (14 ;16 ;18 ;20) en charge de chaque utilisateur dans un environnement de service particulier, le procédé étant **caractérisé en ce qu'**il comprend les étapes consistant à :
(a) récupérer (P-11, P-21, P-31, P-n1, P-00) au niveau de l'UDS (10) des identifiants d'utilisateur et des données de service nécessaires à partir de serveurs de réseau spécifiques (14 ;16 ;18 ;20) fonctionnant comme des bases de données primaires ainsi que de l'autre UDS (12) dans le domaine de résolution de réseau ;
(b) mémoriser au niveau de l'UDS (10) des identifiants d'utilisateur et des données de service nécessaires qui incluent des indicateurs de service pour chaque utilisateur par serveur de réseau spécifique ;
(c) recevoir (S-20 ;P-00) et traiter des demandes de service provenant d'un Noeud Demandeur de Service (28) ou d'un autre UDS (12) dans le domaine de résolution pour un utilisateur donné dans un environnement de service particulier ; et
(d) répondre (S-30 ;P-00) au Noeud Demandeur de Service (28) ou à l'autre UDS (12) :
(d1) un identifiant pour l'adressage (S-40) à un serveur de réseau spécifique (20) en charge dudit utilisateur dans un environnement de service particulier, ou
(d2) une liste d'identifiants de serveur de réseau possibles si une configuration redondante existe, ou
(d3) un nouvel identifiant d'utilisateur indiquant qu'une autre interrogation portant sur ledit nouvel identifiant est nécessaire dans un autre serveur et, optionnellement, indiquant pour quelle raison.

32. Procédé de la revendication 31, incluant en outre l'étape consistant à informer (P-11 ;P-21 ;P-31 ;P-n1) au moins un UDS (10) au sujet des besoins de mise à jour des identifiants d'utilisateur et/ou des données de service nécessaires à l'indication et provenant des bases de données primaires (16 ;14 ;20 ;18) ou d'un autre UDS (12).

33. Procédé de la revendication 32, incluant en variante les étapes d'enregistrement (P-11 ;P-21 ;P-31 ;P-n1) d'un UDS (10) dans, et de retrait (P-11 ;P-21 ;P-31 ;P-n1) d'un UDS (10) de tous les serveurs de réseau (16 ;14 ;20 ;18) enclins à fonctionner comme des bases de données primaires.

34. Procédé de la revendication 33, incluant en outre les étapes d'indication (P-11 ;P-21 ;P-31 ;P-n1) des préférences de récupération UDS d'au moins une base de données primaire (16 ;14 ;20 ;18) pour récupérer des identifiants d'utilisateur et/ou des données de service nécessaires pour tous les utilisateurs desservis, pour un ensemble spécifique d'utilisateur ou seulement pour un utilisateur particulier.

35. Procédé de la revendication 34, incluant en outre les étapes de réception (P-11 ;P-12) des préférences de récupération UDS à partir d'un UDS spécifique (10 ;12), d'un groupe d'UDS (10,12) ou de tous les UDS (10-12) connus dans au moins une base de données primaire (16) et de mise à jour de chaque UDS à partir d'au moins une dite base de données primaire en fonction de chacune des préférences de récupération.
